# EUROPÄISCHE PATENTANMELDUNG

(11) **EP 4 567 601 A1**
(43) Veröffentlichungstag der Anmeldung: **11.06.2025**
(21) Anmeldenummer: 23214000.4
(22) Anmeldetag: 04.12.2023
(51) Int. Cl.: G06F 11/07, G06F 21/50

(54) **FEHLERTOLERANZKOMPONENTE ZUM STEUERN DER AKTIVITÄT EINER SYSTEMKOMPONENTE**

(71) Anmelder: Siemens Aktiengesellschaft, 80333 München (DE)
(72) Erfinder: Falk, Rainer, 85435 Erding (DE); Feist, Christian Peter, 80689 München (DE); Fries, Steffen, 85598 Baldham (DE)
(74) Vertreter: Siemens Patent Attorneys

(57) **Zusammenfassung**

Die Erfindung betrifft eine Fehlertoleranzkomponente (11) für ein System (1), aufweisend:
- Eine Empfangseinheit, ausgebildet eine Ereignisbewertung zu empfangen,
wobei die Ereignisbewertung als eine Bewertung bezüglich einer Kritikalität mindestens eines Ereignisses auf dem System (1) und/oder in einem Netzwerk (AN), mit welchem das System (1) verbunden ist, ausgebildet ist,
- eine Steuereinheit (11a), ausgebildet mindestens eine Systemkomponente (9) des Systems (1) in Abhängigkeit der Ereignisbewertung zu steuern,
wodurch für die mindestens eine Systemkomponente (9) jeweils eine Aktivitätsstufe geschaltet wird,
wobei die Aktivitätsstufe vorgibt, welche mindestens eine Aktivität durch die jeweilige Systemkomponente (9) ausführbar ist.

Außerdem betrifft die Erfindung ein übergeordnetes System (1) und Netzwerk (AN) sowie ein zugehöriges Verfahren.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft eine Fehlertoleranzkomponente für ein System. Außerdem betrifft die Erfindung ein übergeordnetes System und Netzwerk sowie ein zugehöriges Verfahren.

### Beschreibung des Stands der Technik

Insbesondere in kritischen Infrastrukturen ist es notwendig, die Funktionalität von Systemen, insbesondere von Geräten, aufrechtzuerhalten. Insbesondere kann es durch ein Ereignis, insbesondere in Form einer Beeinträchtigung, dazu kommen, dass die volle Funktionalität eines Systems, insbesondere Geräts, nicht mehr garantiert oder aufrechterhalten werden kann. Als Ereignis oder auch als Beeinträchtigung ist insbesondere ein Angriff, das Ausnutzen bzw. Auftreten (Erkennen) einer Sicherheitslücke, eine Fehlfunktion einer Komponente des Systems, eine Modifikation einer Komponente des Systems, insbesondere eine mutwillige Modifikation einer Komponente des Systems und/oder ein Ausfall einer Komponente des Systems zu verstehen. Die Fähigkeit die Systemfunktionalität trotz der Beeinträchtigung aufrecht zu erhalten, wird auch als Resilienz oder "Graceful Degradation" bezeichnet. "Graceful Degradation" ist somit die Eigenschaft eines Systems, auf unvorhergesehene oder unerwünschte Ereignisse abgestuft reagieren zu können.

Für netzwerkbasierte Systeme und/oder Endsysteme sind Maßnahmen bekannt, insbesondere infizierte Systeme vom Netz abzutrennen und somit die Verfügbarkeit des Netzes zur Kommunikation zwischen Komponenten aufrecht zu erhalten. Dabei wird typischerweise davon ausgegangen, dass eine Komponente eines netzwerkbasierten Systems bei einer Manipulation komplett ausfallen kann.

Bekannt ist außerdem:
- Der Standard ETSI EN303645 (Consumer IoT Security) definiert in Abschnitt 5.9 Anforderungen an die Resilienz. Ein IoT-Gerät muss seine Grundfunktionalität auch ohne Netzwerkkonnektivität erbringen (anschaulich muss z.B. ein vernetzter Herd auch dann als Herd nutzbar sein, wenn keine Internet-Konnektivität besteht).
- Aus Patent EP3702947-B1 ist bekannt, zusätzliche Funktionalitäten für HW-Apps bereitzustellen, z.B. für ein Monitoren der Ausführungsumgebung.
- Aus Patent EP3428756-B1 ist bekannt, eine Industrieanlage auf Integritätsverletzungen zu prüfen. Dabei werden gezielt Integritätsmessung von physikalischen Randbedingungen gemacht, um diese für einen Plausibilitätscheck mit dem erwarteten Zustand zu nutzen.
- Bekannt ist, den Status einer Softwarekomponente in einem zentralen Inventar ("Inventory") zu speichern.

Speziell um die Integrität zu schützen, sind Maßnahmen aus der IT bekannt, die einzelne Teilaspekte schützen:
- Es ist bekannt, den Startvorgang eines IT-Systems zu prüfen (Secure Boot, Trusted Boot, Verified Boot, Measured Boot). Dabei soll sichergestellt werden bzw. im laufenden Betrieb überprüft werden, dass nur nicht manipulierte Software (Betriebssystem, Treiber) geladen wird.
- Es ist bekannt, die Integrität und/oder Authentizität eines Dateisystems zu prüfen. Dazu werden Prüfsummen von Dateien berechnet und mit Referenzwerten verglichen. Weiterhin sind Virenscanner bekannt, um bekannte Schadsoftware zu erkennen.
- Es sind physikalische Tamperschutzmaßnahmen von IT-Systemen bekannt, z.B. Siegel oder ein Gehäuseschalter eines PC-Gehäuses. Dadurch kann ein Öffnen eines Gehäuses erkannt werden.
- Es ist Network Admission Control bekannt: Dabei überträgt ein IT-System (Client) bei der Netzwerkanmeldung eine Konfigurationsinformation, auf deren Basis Zugang zu einem regulären Netzwerk oder einem Quarantänenetzwerk gewährt wird. Insbesondere können Clients nur mit einem Quarantäne-Netzwerk verbunden werden, die nicht über einen aktuellen Virenscanner verfügen oder auf denen aktuelle Security-Patche nicht installiert sind.
- Es sind MIBs für Netzwerkprotokolle bekannt, die Auskunft über die Art, Größe, Häufigkeit bestimmter Netzwerktelegramme geben und damit eine Denial-of-Service-Angriffserkennung ermöglichen.
- Es sind Mechanismen bekannt, um Softwareimplementierungen gegen das Ausnutzen von Schwachstellen zu härten, z.B. mittels Address Space Layout Randomization (ASLR), Stack Protection, Control Flow Integrity (CFI).
- Es sind Isolationsmechanismen in Hardware (z.B. Separierung von Speicherbereichen mittels ARM TrustZone) oder des Betriebssystems bekannt (z.B. Prozessisolation), um Teile einer Gerätesoftware gegen einen anderen, möglicherweise kompromittierten Teil der Gerätesoftware zu schützen.

Die Aufgabe der Erfindung besteht darin, eine Lösung für eine verbesserte Resilienz bzgl. eines unvorhergesehenen, d.h. vom Systembetreiber ungeplanten, Ereignisses auf einem System bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft eine Fehlertoleranzkomponente (auch als "Graceful Device Functionality Degradation Component" bezeichenbar) für ein System,
aufweisend:
- Eine Empfangseinheit, ausgebildet eine Ereignisbewertung (insbesondere von einer Kritikalitätsbewertungskomponente, auch als "Criticality Evaluation Component" bezeichenbar) zu empfangen, wobei die Ereignisbewertung als eine Bewertung bezüglich einer Kritikalität (auch als Kritikalitätsbewertung bezeichenbar) mindestens eines Ereignisses auf dem System und/oder in einem Netzwerk, mit welchem das System verbunden ist, ausgebildet ist,
- eine Steuereinheit, ausgebildet mindestens eine Systemkomponente des Systems in Abhängigkeit der Ereignisbewertung zu steuern, (und dadurch in Abhängigkeit der Kritikalität,)
   wodurch für die mindestens eine Systemkomponente jeweils eine (individuelle) Aktivitätsstufe geschaltet wird, wobei die Aktivitätsstufe vorgibt, welche mindestens eine Aktivität durch die jeweilige Systemkomponente ausführbar ist.

Das Ereignis kann somit gleichzeitig auf dem System und dem Netzwerk stattfinden oder nur auf/in einem von beiden. Das Ereignis hat insbesondere Auswirkungen auf das System und/oder das Netzwerk, mit welchem das System verbunden ist, d.h. es führt zu einem veränderten Verhalten des Systems, d.h. einer Veränderung darin, wie sich das System bei einer unveränderten Steuerung des Systems von sich aus verhält. Die Kritikalität des mindestens eines Ereignisses beschreibt, wie kritisch die Auswirkungen des Ereignisses auf das System sind, insbesondere mit welchen Folgen auf das Systemverhalten durch das Ereignis zu rechnen ist und ob dies ein unerwünschtes System verhalten mit sich bringt und/oder zu Sicherheitsrisiken führt. Außerdem beschreibt die Kritikalität im Zusammenhang mit Auswirkungen des mindestens einen Ereignisses auf die mindestens eine Systemkomponente insbesondere wie kritische eine durch das Ereignis ggf. geänderte Funktionalität der mindestens einen Systemkomponente ist.

Das Ereignis wird insbesondere von einer Komponente zum Erkennen von mindestens einem Ereignis ("Event Detection Componente" insbesondere "Attack Detection Componente") erkannt. Die Komponente zum Erkennen von mindestens einem Ereignis tritt mit einer Ereignisbewertungskomponente und diese wiederrum mit der erfindungsgemäßen Fehlertoleranzkomponente in Verbindung und letztere stellt insbesondere eine Nachricht bzgl. der Ereignisbewertung des mindestens eines Ereignisses auf dem System und/oder in einem Netzwerk, mit welchem das System verbunden ist, zu Verfügung.

Die Aktivitätsstufe gibt somit zumindest indirekt vor, welche mindestens eine Aktivität durch die jeweilige Systemkomponente und damit durch das System ausführbar ist.

Erfindungsgemäß ist die Steuereinheit ausgebildet die mindestens eine Systemkomponente des Systems in Abhängigkeit der Ereignisbewertung zu steuern, wodurch für die mindestens eine Systemkomponente jeweils eine (individuelle) Aktivitätsstufe geschaltet wird. "Geschaltet" ist in diesem Zusammenhang insbesondere als "festgelegt und dadurch angesteuert und aktiviert" zu verstehen. Insbesondere wird die mindestens eine Systemkomponente dadurch deaktiviert (inaktiviert), abgeschaltet, teilweise in ihrer Aktivität abgeschaltet, in ihrer Aktivität eingeschränkt und/oder in ihrer Aktivität reduziert.

Durch das Schalten der individuellen Aktivitätsstufe ist insbesondere eine mehrstufige Einschränkung (und anschließend auch wieder eine mehrstufige Erweiterung) erreichbar, wodurch von der Systemkomponente und dadurch von dem System, auch wenn ein kritisches Ereignis vorliegt, insbesondere wenn das System angegriffen wurde, noch die jeweils verlässlich verfügbare Restfunktionalität bereitstellbar ist. Wenn ein kritisches Ereignis nicht mehr vorliegt, kann eine zurückliegend vorgenommene Einschränkung zurückgenommen werden.

Ein Aspekt der Erfindung besteht somit darin, auf einem System im Fall eines unvorhergesehenen, ungewollten und/oder unwillentlichen Ereignisses (insbesondere ein Angriff, eine Sicherheitslücke, eine Fehlfunktion einer Komponente des Systems, eine ggf. mutwillige Modifikation) verlässlich eine eingeschränkte Funktionalität (geringere Aktivität) zur Verfügung zu stellen.

Die Erfindung bietet u.a. den Vorteil, dass die vorgeschlagene Lösung die generelle Verfügbarkeit von Systemen auch unter dem Einfluss von Ereignissen, insbesondere potenziellen Störungen, des Systems erhöht, z.B. durch Angriffe oder durch bekannte Schwachstellen. Durch die jeweiligen Aktivitätsstufen kann eine reduzierte Diensteverfügbarkeit sichergestellt werden, auch unter dem Einfluss von potenziellen Angriffen. Über ein "Probing" kann außerdem zudem versucht werden, in den vorherigen (ungestörten) Zustand zurückzukehren. Probing bedeutet hierbei ein schrittweises Reaktivieren der (temporär) deaktivierten Komponenten, um die Restfunktionalität wieder schrittweise bis zur vollen Funktionalität zu erweitern.

In einer Weiterbildung der Erfindung ist das Ereignis ausgebildet als:
- ein Angriff,
- eine auftretende, d.h. eine festgestellte Sicherheitslücke,
- eine auftretende, d.h. eine festgestellte Fehlfunktion,
- eine Modifikation, insbesondere eine mutwillige Modifikation und/oder
- ein Ausfall,
jeweils auf dem System und/oder in dem Netzwerk, mit welchem das System verbunden ist.

In einer weiteren Weiterbildung der Erfindung führt das Ereignis zu einer Beeinträchtigung des Systems und/oder des Netzwerks, mit welchem das System verbunden ist.

In einer weiteren Weiterbildung der Erfindung bezieht die Ereignisbewertung eine Bewertung bezüglich einer Kritikalität (auch als Kritikalitätsbewertung bezeichenbar) der Beeinträchtigung ein - zusätzlich zu der Bewertung bezüglich der Kritikalität des mindestens einen Ereignisses an sich.

Die Ereignisbewertung kann manipulationsgeschützt, vorzugsweise kryptographisch geschützt und/oder physikalisch tampergeschützt, bereitgestellt werden. Weiterhin kann eine Ersatz-Ereignisbewertungsinformation verwendet werden, wenn über einen vorgegebenen Zeitraum keine Ereignisbewertung oder keine gültige Ereignisbewertung empfangen wird. Dadurch kann die Steuereinheit automatisch Aktivierungsstufen von zumindest einer Systemkomponente schalten, wenn keine Ereignisbewertung über den vorgegebenen Zeitraum empfangen wird.

In einer weiteren Weiterbildung der Erfindung ist die mindestens eine Systemkomponente ausgebildet als:
- mindestens eine Softwarekomponente und/oder
- mindestens eine Hardwarekomponente.

Eine Ausführungsform für eine abschaltbare Komponente ist ein Netzwerkmodul in einem Schutzgerät. Wenn das Schutzgerät feststellt, dass das Netzwerkmodul den normalen Betrieb (insbesondere die Schutzfunktion eines Energienetzes) gefährdet, insbesondere wenn ein DoS-Angriff (denial-ofservice-Angriff) erfolgt, dann wird diese Komponente abgeschaltet. Das Schutzgerät erfüllt dann noch immer auf Basis der eigenen Messwerte die Schutzfunktion lokal. Wird in diesem Fall das Netzwerkmodul abgeschaltet, kann die fehlende Kommunikation durch ein Monitoring System im Netzwerk festgestellt werden. Basierend darauf können weitere Aktionen initiiert oder durchgeführt werden.

In einer weiteren Weiterbildung der Erfindung weist die Fehlertoleranzkomponente außerdem auf:
- eine Datenbank, ausgebildet ein Inventar zu speichern, das Inventar aufweisend jeweils eine Betriebsbewertung für jede der mindestens einen Systemkomponente, wobei die jeweils eine Betriebsbewertung jeweils als eine Bewertung der Betriebskritikalität der mindestens einen Systemkomponente ausgebildet ist.

Nach dieser Ausführungsform wird auf der Fehlertoleranzkomponente, auch möglich generell auf dem System, ein lokales Inventar (auch als "Inventory" bezeichenbar) der genutzten Systemkomponenten, insbesondere Softwarekomponenten (Assets), vorgehalten. Dieses Inventar wird insbesondere lokal von einer Inventarisierungseinheit aufgebaut. Es kann auch mit einem zentralen Inventar abgeglichen werden. Das Inventar enthält insbesondere auch eine Information zu einem Sicherheitsstatus der mindestens eine Systemkomponente (insbesondere zu bekannten Schwachstellen der Systemkomponenten / CVEs und insbesondere deren Lokalisationen).

Die Betriebskritikalität der mindestens einen Systemkomponente ist dabei auf unterschiedlichen Wegen konfigurierbar. Insbesondere durch:
- Eine lokale Konfiguration der Betriebskritikalität der mindestens einen Systemkomponente, manuell und/oder automatisiert, insbesondere durch ein Einlesen einer (Anlagen-)Konfiguration und/oder
- Eine zentrale Konfiguration der Betriebskritikalität der mindestens einen Systemkomponente, systemspezifisch und/oder im Kontext einer Anlagenkonfiguration.

Die Betriebskritikalität beschreibt die Kritikalität des Betriebs der mindestens einen Systemkomponente generell. Dies umfasst, wie wesentlich ist die mindestens eine Systemkomponente für die Erbringung der Funktionalität des Systems, insbesondere eines bestimmten von dem System auszuführenden Services. Die Betriebskritikalität ist unterschiedlich zur Kritikalität des mindestens einen Ereignisses. Die Betriebskritikalität ist eine Bewertung, die insbesondere unabhängig von Auswirkungen des mindestens einen Ereignisses ist. Je nach Ereignis ist es auch möglich, das die Betriebskritikalität von dem Ereignis beeinflusst wird. Die Betriebskritikalität der mindestens einen Systemkomponente kann durch den Gerätehersteller vorkonfiguriert sein, oder sie kann über eine Konfigurationsschnittstelle durch einen Betreiber oder Integrator projektierbar sein.

In einer weiteren Weiterbildung der Erfindung ist die jeweils eine Betriebsbewertung jeweils in Abhängigkeit eines Anwendungsfalls der jeweiligen mindestens einen Systemkomponente ausgebildet.

Der Anwendungsfall der jeweiligen mindestens einen Systemkomponente ist auch zu verstehen als ein Einsatzbereich, eine Einsatzumgebung und/oder Anwendungsumgebung in dem System und/oder Netzwerk.

Nach dieser Ausführungsform wird die Betriebskritikalität (zusätzlich zur Angriffskritikalität) der jeweiligen Systemkomponente für den eigentlichen Anwendungsfall festgelegt. Die Betriebskritikalität der jeweiligen Systemkomponente wird dabei durch den eigentlichen Anwendungsfall (Funktionalität, Einsatzumgebung, etc.) bestimmt. Das heißt, dass eine Systemkomponente, die in unterschiedlichen Endsystemen verbaut ist, auch unterschiedlich durch das Ereignis betroffen sein kann und dadurch unterschiedlich in ihrer betrieblichen Notwendigkeit und/oder Priorität bewertet wird.

In einer weiteren Weiterbildung der Erfindung ist die Steuereinheit außerdem ausgebildet, die mindestens eine Systemkomponente in Abhängigkeit der Betriebsbewertung zu steuern.

Diese hat den Vorteil, dass das Inventar und die Betriebsbewertung von der Steuereinheit für ein Steuern der Systemkomponente genutzt werden. Hierdurch wiederum sind insbesondere weniger betriebskritische Systemkomponenten (verglichen zu stärker betriebskritische Systemkomponenten) deaktivierbar und/oder in ihrer Aktivität und/oder Funktionalität reduzierbar.

In einer weiteren Weiterbildung der Erfindung legt die Aktivitätsstufe, welche von der Steuereinheit jeweils für die mindestens eine Systemkomponente geschaltet wird:
- eine Inaktivität, (auch als ein Abschalten und/oder ein Ausschalten herbeiführend, zu betrachten),
- eine reduzierte (eingeschränkte) verfügbare Aktivität verglichen zur bisherigen Aktivität,
- eine reduzierte (auch als "eingeschränkte" bezeichenbar) verfügbare Aktivität verglichen zur maximalen für die mindestens eine Systemkomponente vorgesehenen Aktivität, und/oder
- eine erhöhte (auch als "gesteigerte" bezeichenbar) verfügbare Aktivität verglichen zur vorherig verfügbaren Aktivität,
für die mindestens eine Systemkomponente fest (auch als "vorgibt" bezeichenbar).

Die Aktivitätsstufe ist auch als eine Funktionalitätsstufe zu verstehen. Es ist eine Vielzahl an Aktivitätsstufen vorgesehen, welche insbesondere eine Rangfolge bilden und/oder in Kategorien einteilbar sind.

Erfindungsgemäß wird durch das Schalten der individuellen Aktivitätsstufe eine mehrstufige Einschränkung erreicht, wodurch das Endsystem, auch wenn ein kritisches Ereignis vorliegt, insbesondere wenn das System angegriffen wurde, noch die jeweils verlässlich verfügbare Restfunktionalität bereitstellt. Nach einer Ausführungsform werden somit abhängig von der aktuell vorliegenden Angriffskritikalität mehrstufig einzelne Softwarekomponenten, die von einem Betriebssystem bzw. einer Ausführungsumgebung ausgeführt werden, schrittweise und/oder teilweise deaktiviert, d.h. beendet oder angehalten oder es werden deren Zugriffsmöglichkeiten eingeschränkt oder gesperrt.

Die verfügbare Aktivität ist als eine durch die mindestens eine Systemkomponente ansteuerbare Aktivität zu verstehen. Die ansteuerbare Aktivität der mindestens einen Systemkomponente umfasst eine Funktionalität der mindestens einen Systemkomponente. Insbesondere umfasst die ansteuerbare/verfügbare Aktivität somit eine Funktionalität, welche von der mindestens einen Systemkomponente ausgeführt werden kann, d.h. ausführbar ist. Somit ist die verfügbare Aktivität auch als eine verfügbare Funktionalität zu verstehen. Somit bedeutet eine reduzierte oder eingeschränkte Aktivität auch eine Restfunktionalität. Da für die Aktivitätsstufen eine Vielzahl an unterschiedlichen Aktivitätsstufen vorgesehen ist, gilt dies insbesondere auch für die verfügbare Aktivität.

Die bisherige Aktivität beschreibt eine zeitlich vorrangegangene Aktivität der mindestens einen Systemkomponente. Die Aktivitätsstufe der reduzierten (eingeschränkte) verfügbaren Aktivität verglichen zur bisherigen Aktivität ist somit eine Aktivitätsstufe, die vorgibt, dass die Aktivität, der mindestens einen Systemkomponente geringer ist als jene Aktivität vor dem Schalten der Aktivitätsstufe.

Die maximale für die mindestens eine Systemkomponente vorgesehenen Aktivität beschreibt eine standardmäßig (auch als "voreingestellt" und/oder "default" bezeichenbar) ausführbare Aktivität der mindestens einen Systemkomponente. Die Aktivitätsstufe der reduzierten (eingeschränkte) verfügbaren Aktivität verglichen zur maximalen für die mindestens eine Systemkomponente vorgesehenen Aktivität ist somit eine Aktivitätsstufe, die vorgibt, dass die Aktivität, der mindestens einen Systemkomponente geringer ist als jene Aktivität, welche standardmäßig (default) für die Systemkomponente vorgesehen ist. Somit sind durch das Schalten dieser Aktivitätsstufe Funktionalitäten, welche standardmäßig (default) ausführbar sind, nicht mehr ausführbar oder nutzbar.

Die erhöhte (gesteigerte) verfügbare Aktivität verglichen zur vorherig (d.h. vorrangegangen, insbesondere direkt vorrangegangen) verfügbaren Aktivität ist insbesondere dann relevant, wenn vorherig (d.h. vorrangegangen, insbesondere direkt vorrangegangen) die reduzierte (eingeschränkte) verfügbare Aktivität verglichen zur bisherigen Aktivität oder die reduzierte (eingeschränkte) verfügbare Aktivität verglichen zur maximalen für die mindestens eine Systemkomponente vorgesehenen Aktivität geschalten war. Es entspricht einem Reaktivieren und/oder einem Zurückschalten der Aktivität der Systemkomponente, insbesondere wenn das Ereignisses auf dem System oder in dem Netzwerk, mit welchem das System verbunden ist, als weniger kritisch eingestuft/bewertet wird. So wird insbesondere bei zurückgehender, weniger kritischer Ereignis-, insbesondere Angriffsbewertung, schrittweise eine temporär deaktivierte Systemkomponente reaktiviert und so die Restfunktionalität wieder schrittweise erweitert.

Das Schalten/Festlegen der reduzierten Aktivität/Funktionalität der Systemkomponente enthält insbesondere folgende Aktivitätsausprägungen/Parameter:
- ein Abschalten,
- ein Abschalten für einen vorgegebenen Zeitraum,
- ein Abschalten bis zu einem auslösenden Wert (auch als ein "Triggerwert" bezeichenbar, welcher insbesondere lokal messbar und/oder über eine Kommunikationsschnittstelle bereitstellbar ist) und/oder
- ein Abschalten von Teilfunktionalitäten der Systemkomponente (insbesondere bei einem Netzwerkmodul nur noch bestimmte Events zulassen, nur noch bestimmte Nutzer, die sich per SSH authentifizieren können, etc.). Bei einem Schutzgerät kann die Teilfunktionalität insbesondere die TRIP-Nachricht an einen Aktor sein, um in einem Gefahrenfall eine Netztrennung auszulösen, ausführbar.

In einer weiteren Weiterbildung der Erfindung ist die Steuereinheit außerdem ausgebildet, die mindestens eine Systemkomponente in Abhängigkeit einer Ereignisverlaufsbewertung zu steuern,
wobei die Ereignisverlaufsbewertung als eine Bewertung bezüglich einer Kritikalität (auch als Kritikalitätsverlaufsbewertung bezeichenbar):
- eines zeitlichen Verlaufs und/oder
- eines zeitlichen Zurückliegens
des mindestens eines Ereignisses auf dem System oder in dem Netzwerk, mit welchem das System verbunden ist, ausgebildet ist.

So ist insbesondere ein Schalten der erhöhten (gesteigerten) verfügbaren Aktivität verglichen zur vorherig verfügbaren Aktivität möglich. Somit ist ein zeitlich begrenztes Steuern und/oder eine zeitlich begrenzte reduzierte Aktivität/Funktionalität der Systemkomponenten möglich. Eine zeitlich begrenzte Abschaltung ermöglicht eine Verifikation, ob insbesondere die eigentliche Störung/Auswirkung, welche durch das Ereignis erzeugt wurde, beseitigt wurde und einen Rückfall/Rückkehr zum Normalbetrieb der mindestens einen Systemkomponente.

In einer weiteren Weiterbildung der Erfindung weist die Fehlertoleranzkomponente außerdem auf:
- eine Sendeeinheit, ausgebildet eine Nachricht bezüglich der geschalteten Aktivitätsstufe zu senden.

In dieser weiterführenden Variante wird die Nachricht, insbesondere eine Information über eine reduzierte Funktionalität, welche durch die geschalteten Aktivitätsstufe vorgegeben wird, gesendet; insbesondere an ein SIEM-System gemeldet, um damit einen systemweiten Status des Systems, insbesondere einer Anlage, ableiten zu können.

In einer weiterführenden Variante wird die Information über eine reduzierte Funktionalität über eine separate Schnittstelle an ein SIEM-System gemeldet. Dies ermöglicht eine hardwareseitige Trennung der Funktionalitäten für den eigentlichen Betrieb des Systems/Gerätes und für das Monitoren des Systems/Gerätes und erlaubt auch im Störfall die Meldung an ein zentrales System, ohne die eigentliche Funktionalität des Systems/Gerätes zu beeinflussen.

Die Erfindung umfasst außerdem ein System aufweisend die erfindungsgemäße Fehlertoleranzkomponente.

In einer weiteren Weiterbildung der Erfindung ist das erfindungsgemäße System ausgebildet als:
- Ein Gerät,
- ein Endsystem,
- ein Endgerät,
- ein Steuergerät,
- ein Netzwerkgerät,
- ein Internet-of-Things-Gerät (IoT-Gerät),
- ein Sicherheitsgerät und/oder
- ein Schutzgerät.

In einer weiteren Weiterbildung der Erfindung weist das System außerdem auf:
- Eine Komponente zum Erkennen des Ereignisses (insbesondere von mindestens einem Ereignis) (auch als "Event Detection Componente", insbesondere als "Attack Detection Componente" bezeichenbar) auf dem System oder in dem Netzwerk, mit welchem das System verbunden ist, und/oder
- Eine Kritikalitätsbewertungskomponente (auch als "Criticality Evaluation Component" bezeichenbar), ausgebildet die Ereignisbewertung, ausgebildet als die Bewertung bezüglich der Kritikalität (auch als Kritikalitätsbewertung bezeichenbar) des mindestens einen Ereignisses auf dem System oder in dem Netzwerk, mit welchem das System verbunden ist, zu erstellen.

Das System, insbesondere ein Endsystem, ermittelt durch die Kritikalitätsbewertungskomponente eine Kritikalität eines Ereignisses, insbesondere eine Angriffskritikalität eines versuchten oder erfolgreichen Angriffs (= Manipulation), auf das Endsystem (insbesondere ein Endgerät) und/oder in dem Netzwerk, mit dem das Endsystem verbunden ist. Abhängig von der ermittelten Kritikalität und deren Bewertung (Ereignisbewertung) wird durch die Fehlertoleranzkomponente ermittelt, welche Komponenten, insbesondere Softwarekomponenten, des Endsystems unter diesem Angriffsszenario zu steuern, insbesondere zu deaktivieren, sind.

Die erfindungsgemäßen Komponenten (d.h. die Komponente zum Erkennen von Ereignissen (Event Detection Componente insbesondere Attack Detection Component), die Kritikalitätsbewertungskomponente (Criticality Evaluation Component) und/oder speziell die Fehlertoleranzkomponente (Graceful Device Functionality Degradation Component)) sind insbesondere als eigenständige Hardwaremodule (z.B. FPGA, PCIe Erweiterungskarte, spezielle Chips / ASICs) und/oder auch als speziell geschützte Softwarekomponenten auf der Haupt-CPU ausführbar (insbesondere indem sie mittels eines Hypervisors oder Hardware-Isolationsmechanismen von der restlichen Ausführungsumgebung (Betriebssystem (OS) und Software-Komponenten (SWC)) getrennt werden).

Die Komponente zum Erkennen von mindestens einem Ereignis ("Event Detection Component" insbesondere "Attack Detection Componente") ist insbesondere ausgebildete zum Feststellen von:
- einem externen Auslöser (Trigger), insbesondere durch ein SIEM-System basierend auf bekannten Schwachstellen in einer Systemkomponente des Systems oder auch über bereits erkannte Ereignisse und/oder Angriffe auf andere Systeme und/oder Geräte und/oder Unregelmäßigkeiten im überwachten System und/oder
- einem internen Auslöser (Trigger), insbesondere über ein HIDS oder über Unregelmäßigkeiten im Betrieb des Systems, die von einer Normalsituation abweichen (insbesondere Denial of Service Angriffe).

Die Erfindung umfasst außerdem ein Netzwerk (als übergeordnetes System, insbesondere ein Automatisierungsnetzwerk), aufweisend:
- Eine Vielzahl (d.h. mindestens zwei) an erfindungsgemäßen Systemen,
   und
- ein Sicherheitsinformations- und Ereignismanagementsystem (Security information and event management system, SIEM-System),
- ein Netzwerkübergang, und/oder
- eine Kontrolleinheit (auch als "Control-Center" bezeichenbar).

Die Vielzahl an Systemen ist insbesondere über den Netzwerkübergang mit der Kontrolleinheit verbunden. Außerdem ist die Vielzahl an Systemen insbesondere mit dem Sicherheitsinformations- und Ereignismanagementsystem (Security information and event management system, SIEM-System) verbunden. Das SIEM-System ist lokal mit der Vielzahl an Systemen verbunden oder in der Kontrolleinheit ausgebildet.

Weiterhin kann eine Anbindung an ein Inventar existieren, um einen Status der insgesamt im System vorhanden Komponenten ableiten zu können.

Die Erfindung umfasst außerdem ein Verfahren zum Steuern mindestens einer Systemkomponente eines Systems in Abhängigkeit einer Ereignisbewertung (durch eine Fehlertoleranzkomponente (auch als "Graceful Device Functionality Degradation Component" bezeichenbar),
mit den Schritten:
- Ein Empfangen der Ereignisbewertung (wobei von einer Kritikalitätsbewertungskomponente, auch als "Criticality Evaluation Component" bezeichenbar, empfangen wird), wobei die Ereignisbewertung als eine Bewertung bezüglich einer Kritikalität (auch als Kritikalitätsbewertung bezeichenbar) mindestens eines Ereignisses auf dem System und/oder in einem Netzwerk, mit welchem das System verbunden ist, ausgebildet ist,
- Ein Steuern der mindestens einen Systemkomponente des Systems in Abhängigkeit der Ereignisbewertung, wodurch ein Schalten von jeweils einer (individuellen) Aktivitätsstufe für die mindestens eine Systemkomponente durchgeführt wird,
   wobei die Aktivitätsstufe vorgibt, welche mindestens eine Aktivität durch die jeweilige Systemkomponente ausführbar ist.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung eines erfindungsgemäßen Systems und
- Fig. 2: eine schematische Darstellung eines erfindungsgemäßen Netzwerks.

### DETAILLIERTE BESCHREIBUNG DER ERFINDUNG

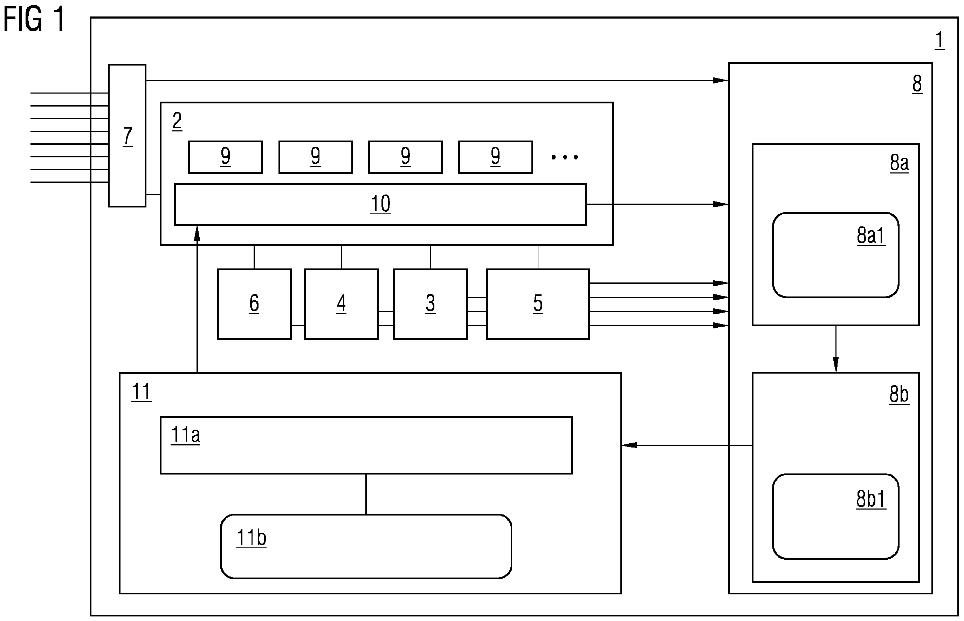

Fig. 1 zeigt ein erfindungsgemäßes System 1, insbesondere ein Steuergerät 1, mit einem Prozessor 2 (CPU 2), Programm- und Konfigurationsspeicher 3 (Flash 3), Arbeitsspeicher 4 (RAM 4), einem Kommunikationsmodul 5 (ComMod 5), einem Sicherheitselement 6, einer Ein-Ausgabeschnittstelle 7 (I/O 7) zum Verbinden von Sensoren und Aktuatoren inkl. Netzwerkkommunikation.

Das Steuergerät 1 verfügt weiterhin über eine Komponente zum Erkennen von Angriffen und zur Bewertung deren Kritikalität 8 (Attack Detection and Criticality Evaluation Component 8). Komponente zum Erkennen von Angriffen und zur Bewertung deren Kritikalität 8 weist eine Einheit zum Erkennen von Angriffen 8a und eine Einheit zur Bewertung deren Kritikalität 8b auf. Zum Erkennen der Angriffe wird eine Angriffsmuster-Datenbank 8a1 herangezogen. Zum Bewerten der Kritikalität wird eine Angriffskritikalitätsrichtlinie 8b1 herangezogen.

Abhängig von der aktuell vorliegenden Angriffskritikalität werden mehrstufig einzelne Softwarekomponenten 9, die von einem Betriebssystem 10 (OS 10) bzw. einer Ausführungsumgebung 10 (RTE, Runtime Enviornment 10) ausgeführt werden durch die erfindungsgemäße Fehlertoleranzkomponente 11 (Graceful Device Functionality Degradation Component 11) deaktiviert, d.h. beendet oder angehalten. Die Fehlertoleranzkomponente 11 weist einen Fehlertoleranzmanager 11a und einen damit verbundene Softwarekomponenten-Datenbank 11b, welche Einträge zu der Betriebskritikalität der Softwarekomponenten 9 aufweist, auf.

Die Komponente zum Erkennen von Angriffen und zur Bewertung deren Kritikalität 8 (Attack Detection and Criticality Evaluation Component 8) und die Fehlertoleranzkomponente 11 (Graceful Device Functionality Degradation 11) können, wie in der Fig. 1 dargestellt, als eigenständige Hardwaremodule (z.B. FPGA, PCIe Erweiterungskarte, spezielle Chips / ASICs), oder auch als speziell geschützte Softwarekomponenten auf der Haupt-CPU ausgeführt werden (z.B. indem sie mittels eines Hypervisors oder Hardware-Isolationsmechanismen von der restlichen Ausführungsumgebung mit Betriebssystem 10 (OS 10) und Softwarekomponenten 9 getrennt werden).

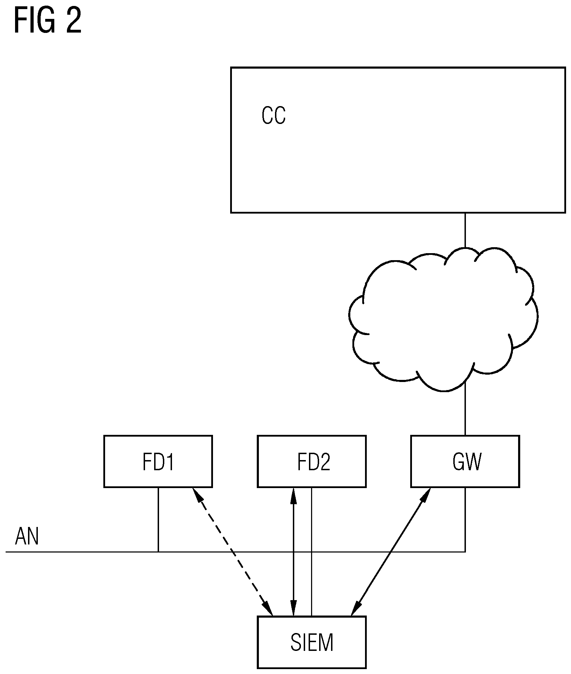

Fig. 2 zeigt die Feldgeräte FD1 und FD2 (sie weisen jeweils die erfindungsgemäße Fehlertoleranzkomponente auf und sind Ausführungsformen des erfindungsgemäßen Systems, in Fig. 1 mit Bezugszeichen 1 bzw. 11 versehen) sowie einen Netzwerkübergang GW von einem Automatisierungsnetzwerk AN in ein Control Center CC (Kontrolleinheit CC). Die gesamte Fig. 2 ist eine Ausführungsform des erfindungsgemäßen Netzwerks. Feldgerät FD1 hat in der Fig. 2 das Netzwerkmodul abgeschaltet (dargestellt durch den gestrichelten Pfeil), da Probleme detektiert wurden. Dies entspricht einem Ereignis auf dem Feldgerät FD1. Damit erhält das Security information and event management System SIEM (hier lokal, kann aber auch oder zusätzlich im Control Center CC sein) keine Monitoring-Information von Feldgerät FD1 und kann entsprechende Aktionen einleiten und mit der Komponente zum Erkennen von mindestens einem Ereignis (in Fig. 1 mit Bezugszeichen 8a dargestellt) in Verbindung treten.

Die Komponente zum Erkennen von mindestens einem Ereignis ("Event Detection Componente" insbesondere "Attack Detection Componente") wird ebenfalls von den Feldgeräte FD1 und FD2 aufgewiesen. Sie ist insbesondere ausgebildete zum Feststellen von:
- einem externen Auslöser (Trigger), insbesondere durch ein SIEM-System basierend auf bekannten Schwachstellen in einer Systemkomponente des Systems oder auch über bereits erkannte Ereignisse und/oder Angriffe auf andere Systeme und/oder Geräte und/oder
- einem internen Auslöser (Trigger), insbesondere über ein HIDS oder über Unregelmäßigkeiten im Betrieb des Systems, die von einer Normalsituation abweichen (insbesondere Denial of Service Angriffe).

Die Komponente zum Erkennen von mindestens einem Ereignis tritt mit der Kritikalitätsbewertungskomponente (in Fig. 1 mit Bezugszeichen 8b dargestellt) und diese wiederrum mit der erfindungsgemäßen Fehlertoleranzkomponente in Verbindung und stellt eine Nachricht bzgl. des mindestens eines Ereignisses auf dem System und/oder in einem Netzwerk, mit welchem das System verbunden ist, zu Verfügung.

Hat Feldgerät FD1 das Netzwerkmodul abgeschaltet und ist ansonsten noch eingeschränkt funktionsfähig, kann es mit reduzierter Funktionalität weiter genutzt werden. Dies wird von der Fehlertoleranzkomponente und deren Steuereinheit eingeleitet.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Fehlertoleranzkomponente (11) für ein System (1), aufweisend:
- Eine Empfangseinheit, ausgebildet eine Ereignisbewertung zu empfangen,
wobei die Ereignisbewertung als eine Bewertung bezüglich einer Kritikalität mindestens eines Ereignisses auf dem System (1) und/oder in einem Netzwerk (AN), mit welchem das System (1) verbunden ist, ausgebildet ist,
- eine Steuereinheit (11a), ausgebildet mindestens eine Systemkomponente (9) des Systems (1) in Abhängigkeit der Ereignisbewertung zu steuern,
wodurch für die mindestens eine Systemkomponente (9) jeweils eine Aktivitätsstufe geschaltet wird,
wobei die Aktivitätsstufe vorgibt, welche mindestens eine Aktivität durch die jeweilige Systemkomponente (9) ausführbar ist.

2. Fehlertoleranzkomponente (11) nach Anspruch 1,
wobei das Ereignis ausgebildet ist als:
- ein Angriff,
- eine auftretende Sicherheitslücke,
- eine auftretende Fehlfunktion,
- eine Modifikation und/oder
- ein Ausfall,
jeweils auf dem System (1) und/oder in dem Netzwerk (AN), mit welchem das System (1) verbunden ist.

3. Fehlertoleranzkomponente (11) nach einem der vorhergehenden Ansprüche,
wobei das Ereignis zu einer Beeinträchtigung des Systems (1) und/oder des Netzwerks (AN), mit welchem das System (1) verbunden ist, führt und
wobei die Ereignisbewertung eine Bewertung bezüglich einer Kritikalität der Beeinträchtigung einbezieht.

4. Fehlertoleranzkomponente (11) nach einem der vorhergehenden Ansprüche,
wobei die mindestens eine Systemkomponente (9) ausgebildet ist als:
- mindestens eine Softwarekomponente (9) und/oder
- mindestens eine Hardwarekomponente (9).

5. Fehlertoleranzkomponente (11) nach einem der vorhergehenden Ansprüche,
außerdem aufweisend:
- eine Datenbank (11b), ausgebildet ein Inventar zu speichern,
das Inventar aufweisend jeweils eine Betriebsbewertung für jede der mindestens einen Systemkomponente (9), wobei die jeweils eine Betriebsbewertung jeweils als eine Bewertung der Betriebskritikalität der mindestens einen Systemkomponente (9) ausgebildet ist.

6. Fehlertoleranzkomponente (11) nach Anspruch 5,
wobei die jeweils eine Betriebsbewertung jeweils in Abhängigkeit eines Anwendungsfalls der jeweiligen mindestens einen Systemkomponente (9) ausgebildet ist.

7. Fehlertoleranzkomponente (11) nach Anspruch 5 oder 6,
wobei die Steuereinheit (11a) außerdem ausgebildet ist, die mindestens eine Systemkomponente (9) in Abhängigkeit der Betriebsbewertung zu steuern.

8. Fehlertoleranzkomponente (11) nach einem der vorhergehenden Ansprüche,
wobei die Aktivitätsstufe, welche von der Steuereinheit (11a) jeweils für die mindestens eine Systemkomponente (9) geschaltet wird:
- eine Inaktivität,
- eine reduzierte verfügbare Aktivität verglichen zur bisherigen Aktivität,
- eine reduzierte verfügbare Aktivität verglichen zur maximalen für die mindestens eine Systemkomponente (9) vorgesehenen Aktivität, und/oder
- eine erhöhte verfügbare Aktivität verglichen zur vorherig verfügbaren Aktivität,
für die mindestens eine Systemkomponente (9) festlegt.

9. Fehlertoleranzkomponente (11) nach einem der vorhergehenden Ansprüche,
wobei die Steuereinheit (11a) außerdem ausgebildet ist, die mindestens eine Systemkomponente (9) in Abhängigkeit einer Ereignisverlaufsbewertung zu steuern,
wobei die Ereignisverlaufsbewertung als eine Bewertung bezüglich einer Kritikalität:
- eines zeitlichen Verlaufs und/oder
- eines zeitlichen Zurückliegens
des mindestens eines Ereignisses auf dem System (1) oder in dem Netzwerk (AN), mit welchem das System (1) verbunden ist, ausgebildet ist.

10. Fehlertoleranzkomponente (11) nach einem der vorhergehenden Ansprüche,
außerdem aufweisend:
- eine Sendeeinheit, ausgebildet eine Nachricht bezüglich der geschalteten Aktivitätsstufe zu senden.

11. System (1) aufweisend eine Fehlertoleranzkomponente (11) nach einem der vorhergehenden Ansprüche.

12. System (1) nach Anspruch 11,
ausgebildet als:
- Ein Gerät,
- ein Endsystem,
- ein Endgerät,
- ein Steuergerät,
- ein Netzwerkgerät,
- ein Internet-of-Things-Gerät,
- ein Sicherheitsgerät und/oder
- ein Schutzgerät.

13. System (1) nach Anspruch 11 oder 12,
außerdem aufweisend:
- Eine Komponente zum Erkennen des Ereignisses (8a) auf dem System (1) oder in dem Netzwerk (AN), mit welchem das System (1) verbunden ist, und/oder
- Eine Kritikalitätsbewertungskomponente (8b), ausgebildet die Ereignisbewertung, ausgebildet als die Bewertung bezüglich der Kritikalität des mindestens einen Ereignisses auf dem System (1) oder in dem Netzwerk (AN), mit welchem das System (1) verbunden ist, zu erstellen.

14. Netzwerk (AN), aufweisend:
- Eine Vielzahl an Systemen (1) nach Anspruch einem der Ansprüche 11 bis 13,
und
- ein Sicherheitsinformations- und Ereignismanagementsystem (SIEM),
- ein Netzwerkübergang (GW), und/oder
- eine Kontrolleinheit (CC).

15. Verfahren zum Steuern mindestens einer Systemkomponente (9) eines Systems (1) in Abhängigkeit einer Ereignisbewertung,
mit den Schritten:
- Ein Empfangen der Ereignisbewertung,
wobei die Ereignisbewertung als eine Bewertung bezüglich einer Kritikalität mindestens eines Ereignisses auf dem System (1) und/oder in einem Netzwerk (AN), mit welchem das System (1) verbunden ist, ausgebildet ist,
- Ein Steuern der mindestens einen Systemkomponente (9) des Systems (1) in Abhängigkeit der Ereignisbewertung, wodurch ein Schalten von jeweils einer Aktivitätsstufe für die mindestens eine Systemkomponente (9) durchgeführt wird,
wobei die Aktivitätsstufe vorgibt, welche mindestens eine Aktivität durch die jeweilige Systemkomponente (9) ausführbar ist.
